# EUROPEAN PATENT APPLICATION

(11) **EP 4 503 634 A1**
(43) Date of publication of application: **05.02.2025**
(21) Application number: 23774623.5
(22) Date of filing: 13.03.2023
(51) Int. Cl.: H04N 23/60, G03B 15/00, H04N 21/2187, H04N 21/238

(54) **INFORMATION PROCESSING DEVICE, INFORMATION PROCESSING SYSTEM, AND METHOD FOR CONTROLLING INFORMATION PROCESSING DEVICE**

(30) Priority: 24.03.2022 JP 2022048732
(71) Applicant: Panasonic Intellectual Property Management Co., Ltd., Kadoma-shi, Osaka 571-0057 (JP)
(72) Inventor: OKUBO Ryoji, Kadoma-shi, Osaka 571-0057 (JP); OKAZAKI Yoshinori, Kadoma-shi, Osaka 571-0057 (JP); SAITO Hiroshi, Kadoma-shi, Osaka 571-0057 (JP)
(74) Representative: Novagraaf International SA
(86) International application number: PCT/JP2023/009492
(87) International publication number: WO 2023/182026

(57) **Abstract**

An information processing device is an information processing device that outputs a video stream by using a video captured by an imaging device capable of changing at least one parameter among pan, tilt, and zoom, and includes a parameter controller that controls at least one parameter of the imaging device. The parameter controller instructs the imaging device to change the at least one parameter, and outputs a switching permission signal for permitting switching of the video stream output from the information processing device when the change of the at least one parameter of the imaging device is completed.

## Description

### TECHNICAL FIELD

The present disclosure relates to an information processing device that outputs a video stream, an information processing system, and a method for controlling the information processing device.

### BACKGROUND ART

Conventionally, an information processing device that outputs a video stream using a video captured by a camera is known (for example, see PTL 1). In such an information processing device, the video stream output from the information processing device is switched according to various scenes captured by the camera.

### Citation List

### Patent Literature

PTL 1: Unexamined Japanese Patent Publication No. 2011-91760

### SUMMARY OF THE INVENTION

However, the information processing device disclosed in PTL 1 may not be able to appropriately switch the video stream.

Therefore, the present disclosure provides an information processing device and the like that can appropriately switch a video stream.

An information processing device according to one aspect of the present disclosure is an information processing device that outputs a video stream by using a video captured by an imaging device capable of changing at least one parameter among pan, tilt, and zoom, the information processing device including a parameter controller that controls the at least one parameter of the imaging device, in which the parameter controller instructs the imaging device to change the at least one parameter, and outputs a switching permission signal for permitting switching of the video stream output from the information processing device when the change of the at least one parameter of the imaging device is completed.

An information processing system according to one aspect of the present disclosure includes: an imaging device capable of changing at least one parameter among pan, tilt, and zoom; a parameter controller that controls the at least one parameter of the imaging device; and a video processor that outputs a video stream by using a video captured by the imaging device, in which the parameter controller instructs the imaging device to change the at least one parameter, and outputs a switching permission signal for permitting switching of the video stream output from the video processor to the video processor when the change of the at least one parameter of the imaging device is completed, and the video processor switches the video stream based on the switching permission signal.

A method for controlling an information processing device according to one aspect of the present disclosure is a method for controlling an information processing device that outputs a video stream by using a video captured by an imaging device capable of changing at least one parameter among pan, tilt, and zoom, the method including the steps of: outputting a parameter signal for instructing the imaging device to change the at least one parameter; and outputting a switching permission signal for permitting switching of the video stream output from the information processing device when the change of the at least one parameter of the imaging device is completed.

According to the information processing device or the like of the present disclosure, switching of a video stream can be appropriately performed.

### BRIEF DESCRIPTION OF THE DRAWINGS

Fig. 1 is a diagram illustrating an information processing system of a comparative example.
Fig. 2 is a ladder diagram illustrating a method for controlling the information processing system of the comparative example.
Fig. 3 is a ladder diagram illustrating a method for controlling an information processing system according to an exemplary embodiment.
Fig. 4 is a block configuration diagram illustrating an information processing system and an information processing device according to the exemplary embodiment.
Fig. 5 is a diagram illustrating preset-related information stored in a storage of the information processing device.
Fig. 6 is a diagram illustrating an example of an operation of the information processing system according to the exemplary embodiment.
Fig. 7 is a flowchart illustrating a method for controlling the information processing device according to the exemplary embodiment.
Fig. 8 is a diagram illustrating an example of an operation of an information processing system according to a first modification of the exemplary embodiment.
Fig. 9 is a flowchart illustrating a method for controlling an information processing device according to a first modification of the exemplary embodiment.
Fig. 10 is a diagram illustrating an example of an operation of an information processing system according to a second modification of the exemplary embodiment.
Fig. 11 is a flowchart illustrating a method for controlling an information processing device according to the second modification of the exemplary embodiment.
Fig. 12 is a diagram illustrating an example of an operation of an information processing system according to a third modification of the exemplary embodiment.
Fig. 13 is a flowchart illustrating a method for controlling an information processing device according to the third modification of the exemplary embodiment.

### DESCRIPTION OF EMBODIMENT

### (Background leading to the present disclosure)

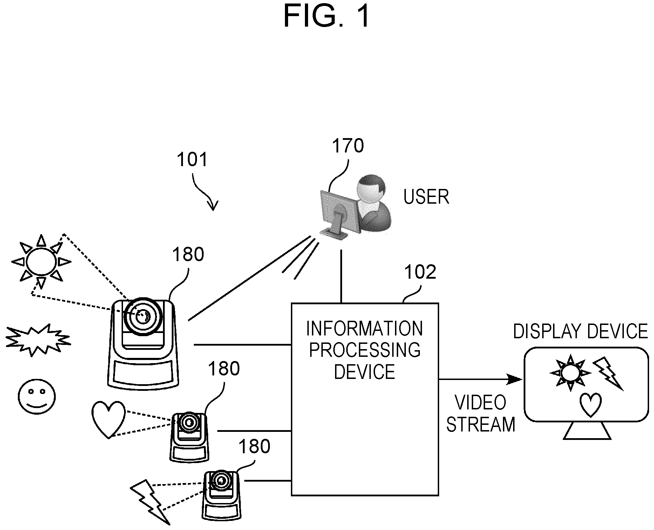

Background leading to the present disclosure will be described with reference to Figs. 1 to 3.

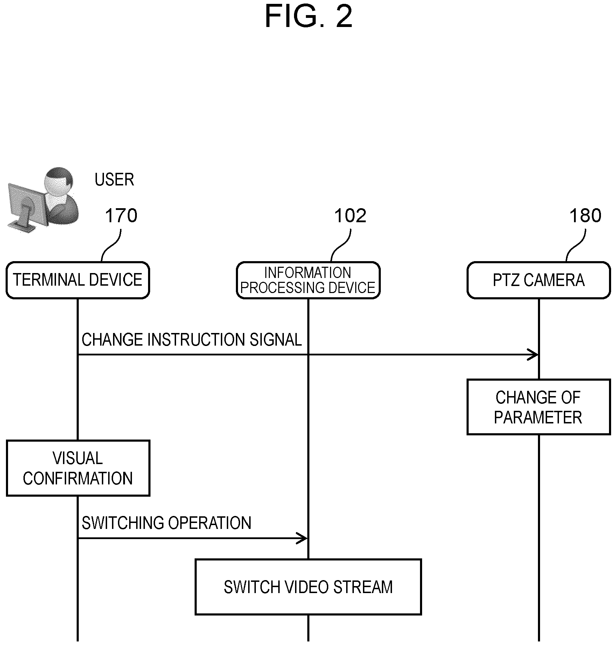

Fig. 1 is a diagram illustrating information processing system 101 according to a comparative example. Fig. 2 is a ladder diagram illustrating a method for controlling information processing system 101 of the comparative example.

As illustrated in Fig. 1, information processing system 101 of the comparative example includes a plurality of PTZ cameras 180, and information processing device 102 that outputs a video stream by using videos captured by the plurality of PTZ cameras 180. In information processing system 101, imaging of various scenes are performed by changing parameters such as pan, tilt, and zoom of PTZ camera 180, and a video stream corresponding to each scene is output.

When changing the parameter, the user using information processing system 101 outputs a signal instructing PTZ camera 180 to change the parameter using terminal device 170 as illustrated in Fig. 2. Then, the user visually confirms that the change of the parameter of PTZ camera 180 is completed, and performs switching operation of the video stream output from information processing device 102. In the comparative example, since whether or not the parameter change is completed is visually confirmed, there is a problem that the timing of the video stream switching operation is delayed or advanced.

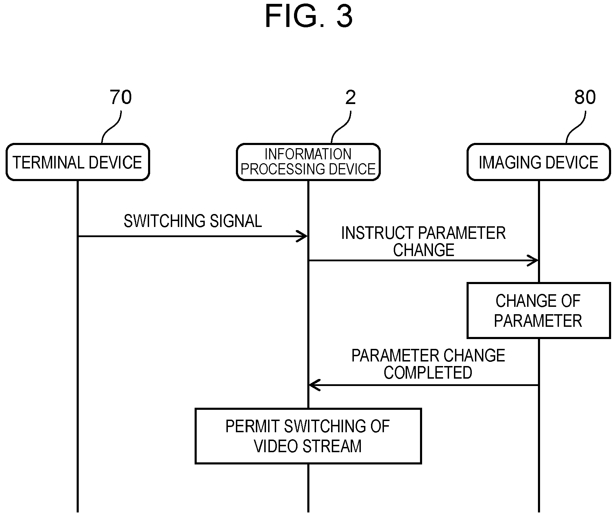

Fig. 3 is a ladder diagram illustrating a method for controlling information processing system 1 according to an exemplary embodiment.

Information processing system 1 according to the exemplary embodiment includes a plurality of imaging devices 80 and information processing device 2 that outputs a video stream using videos captured by the plurality of imaging devices 80. As illustrated in Fig. 3, information processing device 2 instructs imaging device 80 to change the parameter based on the switching signal of terminal device 70, and permits switching of the video stream output from information processing device 2 when the change of the parameter of imaging device 80 is completed. According to this configuration, the video stream output from information processing device 2 can be appropriately switched.

Hereinafter, exemplary embodiments will be described with reference to the drawings. The exemplary embodiments and the like to be described below provide comprehensive or specific examples. Numerical values, shapes, materials, constituent elements, disposition positions and connection modes of the constituent elements, steps, order of the steps, and the like illustrated in the following exemplary embodiments and the like are merely examples, and therefore are not intended to limit the present disclosure. In addition, of constituent elements in the following exemplary embodiments and the like, constituent elements that are not recited in the independent claims will be described as optional constituent elements.

In addition, the drawings are schematic views and are not necessarily strictly illustrated. In addition, in the drawings, substantially the same configurations are designated by the same reference marks, and duplicate description may be omitted or simplified. In addition, even in a case where the same object is illustrated in the drawings, a scale may be changed for the sake of convenience.

In addition, in the present specification, terms indicating a relationship between elements, such as coincidence, equal, and parallel, terms indicating a shape of an element, such as plate-shape and rectangular shape, numerical values, and numerical ranges are not expressions representing only strict meanings, but are expressions meaning to include a substantially equivalent range, for example, a difference of about several %.

### (Exemplary embodiment)

### [Configuration of information processing system]

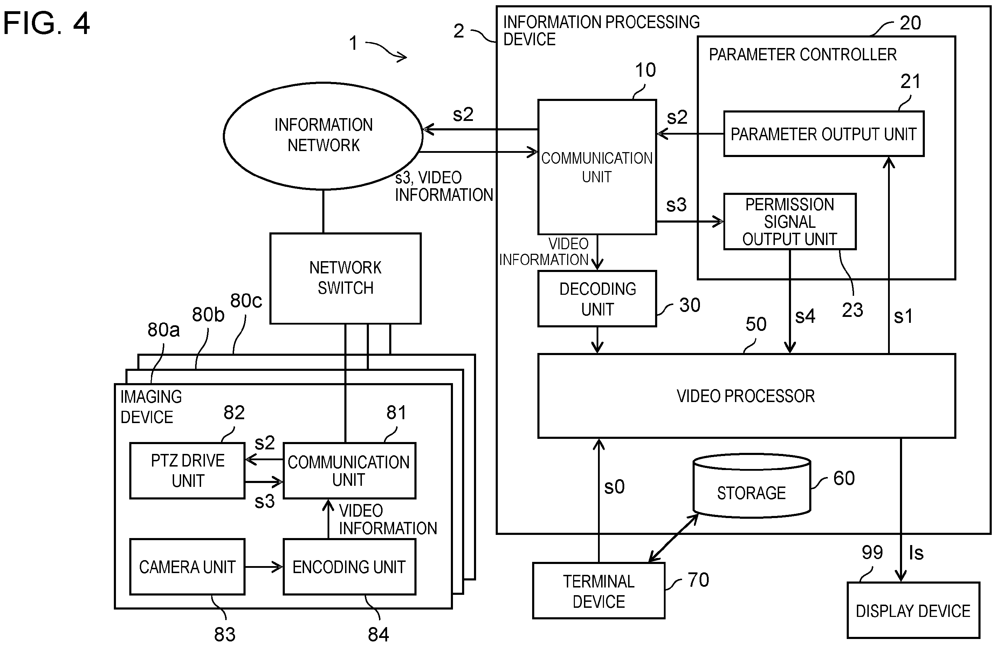

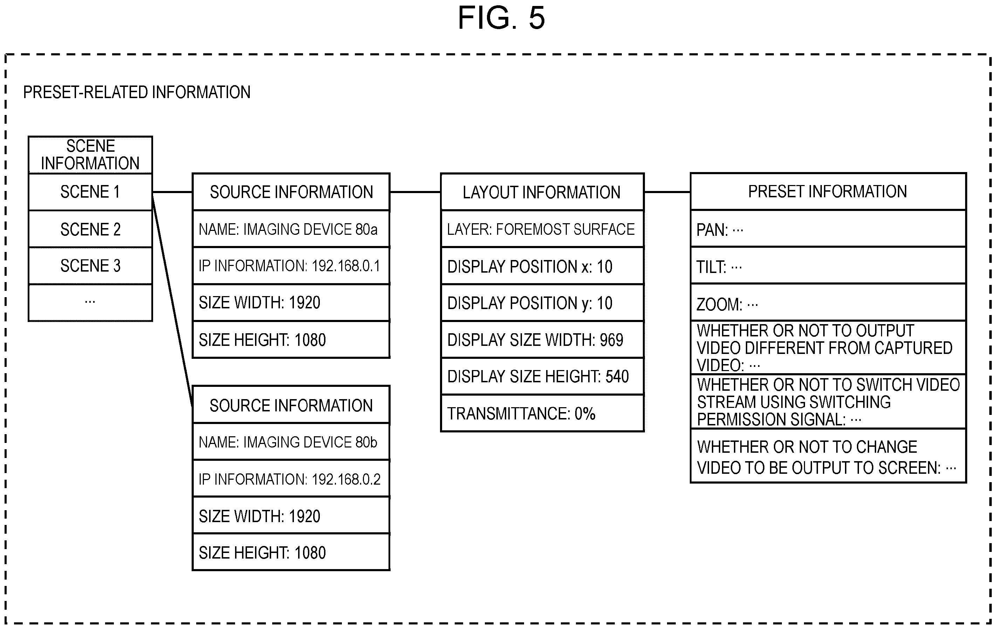

A configuration of an information processing system according to an exemplary embodiment will be described with reference to Figs. 4 and 5.

Fig. 4 is a block configuration diagram illustrating information processing system 1 and information processing device 2 according to the exemplary embodiment. Fig. 4 also illustrates display device 99 that is an output destination of video stream Is. Display device 99 is, for example, a display device, a projector, or a personal computer.

Information processing system 1 includes information processing device 2, terminal device 70, and a plurality of imaging devices 80a, 80b, and 80c.

Information processing device 2 and the plurality of imaging devices 80a to 80c are communicably connected via an information network and a network switch. Information processing device 2 and the plurality of imaging devices 80a to 80c perform bidirectional communication using an Internet Protocol (IP) signal. Communication between information processing device 2 and the plurality of imaging devices 80a to 80c may be wireless communication or wired communication.

Information processing device 2 is a device that outputs video stream Is using a video captured by imaging device 80. Note that video stream Is is data including two or more consecutive images. Video stream Is may include not only a video captured by one imaging device 80a but also videos captured by a plurality of imaging devices 80a to 80c.

Each of imaging devices 80a to 80c is an imaging device capable of changing at least one parameter among pan, tilt, and zoom.

Imaging devices 80a to 80c include communication unit 81, PTZ drive unit 82, camera unit 83, and encoding unit 84. Imaging devices 80a to 80c are, for example, PTZ cameras, and can perform imaging by changing position coordinates of the pan, tilt, and zoom of camera unit 83. Note that the number of imaging devices is not limited to three, and may be one, two, or four or more. Hereinafter, one or all of the imaging devices may be referred to as imaging device 80.

Imaging device 80 is installed, for example, in a facility including a training site, a lecture site, an event site, and the like. Imaging device 80 is remotely operated by information processing device 2 in a state of being fixed to a pedestal, a wall, a ceiling, or the like in the venue.

Communication unit 81 is a communication module, and communicates with information processing device 2 via an information network and a network switch. Communication unit 81 receives a signal transmitted from information processing device 2 and outputs the signal to PTZ drive unit 82. Furthermore, communication unit 81 receives a signal output from PTZ drive unit 82 and transmits the signal to information processing device 2. Furthermore, communication unit 81 receives a signal output from encoding unit 84 and transmits the signal to information processing device 2.

PTZ drive unit 82 has a drive mechanism that moves camera unit 83 in the pan direction, the tilt direction, and the zoom direction. The drive mechanism is, for example, a motor, and camera unit 83 is movable by 360° in the pan direction, movable by 90° in the tilt direction, and movable by 100 mm in the zoom direction. In addition, PTZ drive unit 82 includes a sensor capable of detecting position coordinates of parameters of pan, tilt, and zoom, and has a function of determining whether or not parameter change has been completed.

PTZ drive unit 82 performs parameter change based on parameter signal s2 when receiving parameter signal s2 instructing parameter change from information processing device 2. Specifically, when receiving parameter signal s2, PTZ drive unit 82 moves camera unit 83 so as to change at least one among pan, tilt, and zoom. In addition, in a case where the parameter change is completed, PTZ drive unit 82 outputs change completion signal s3 indicating that the parameter change is completed to information processing device 2 via communication unit 81.

Camera unit 83 is a detector for imaging various scenes, and detects visible light or near-infrared light. Imaging by camera unit 83 is always executed during operation of information processing system 1. Video captured by camera unit 83 is output to encoding unit 84.

Encoding unit 84 encodes the video output from camera unit 83 in a predetermined format. The encoded video information is output to information processing device 2 via communication unit 81.

Terminal device 70 of information processing system 1 is connected to information processing device 2 by wireless communication or wired communication. The terminal device 70 is a user interface, and outputs a command based on the operation input received from the user to information processing device 2. Terminal device 70 can write and store preset-related information including information regarding parameters of imaging device 80 in information processing device 2. Furthermore, terminal device 70 can also read the preset-related information stored in information processing device 2. The preset-related information will be described later.

Terminal device 70 outputs switching signal s0 for switching video stream Is output from information processing device 2 to information processing device 2 according to a predetermined operation input of the user. When receiving switching signal s0 output from terminal device 70, information processing device 2 starts switching video stream Is. Information processing device 2 has the following configuration in order to appropriately switch video stream Is.

### [Configuration of information processing device]

The configuration of information processing device 2 according to the exemplary embodiment will be described.

As illustrated in Fig. 4, information processing device 2 includes communication unit 10, parameter controller 20, decoding unit 30, video processor 50, and storage 60. Parameter controller 20, decoding unit 30, and video processor 50 include a processor, a microcomputer, or the like.

Communication unit 10 is a communication module, and communicates with imaging device 80 via an information network and a network switch. Communication unit 10 receives parameter signal s2 output from parameter controller 20 and transmits parameter signal s2 to imaging device 80. Furthermore, communication unit 10 receives change completion signal s3 transmitted from imaging device 80 and outputs change completion signal s3 to parameter controller 20. Furthermore, communication unit 10 receives a signal including video information transmitted from imaging device 80 and outputs the signal to decoding unit 30.

The video information obtained by encoding a video captured by imaging device 80 is input to decoding unit 30. Decoding unit 30 performs decoding processing on (decodes) the video information encoded by imaging device 80 according to the encoding format. In a case where there are a plurality of imaging devices 80, decoding unit 30 performs decoding processing on each of the plurality of pieces of video information encoded by the plurality of imaging devices 80, and outputs a plurality of videos corresponding to the plurality of pieces of video information to video processor 50.

Parameter controller 20 controls at least one parameter among pan, tilt, and zoom of imaging device 80. Furthermore, parameter controller 20 instructs imaging device 80 to change the parameter, and outputs switching permission signal s4 for permitting switching of video stream Is output from information processing device 2 in a case where the change of the parameter of imaging device 80 is completed.

Parameter controller 20 includes parameter output unit 21 and permission signal output unit 23. The functions of parameter output unit 21 and permission signal output unit 23 are implemented by executing a software program stored in storage 60.

Parameter output unit 21 outputs parameter signal s2 for instructing imaging device 80 to change the parameter. Parameter signal s2 includes preset-related information including information regarding parameters of imaging device 80.

Fig. 5 is a diagram illustrating preset-related information stored in storage 60 of information processing device 2.

Storage 60 is, for example, a nonvolatile storage device such as a flash memory. Storage 60 stores a software program executed by information processing device 2 and preset information.

As illustrated in Fig. 5, storage 60 stores scene information, source information, layout information, and preset information in association with one another. In the present exemplary embodiment, scene information, source information, layout information, preset information, and the like are collectively referred to as preset-related information.

The scene information is information indicating various scenes held in a venue. For example, in a venue where an online class is held, there are scenes such as a scene where a teacher is standing on a platform and talking, a scene where characters described on a whiteboard are shown, a scene where a student is listening to a teacher's speech, and a scene where one of the students is speaking. One or a plurality of pieces of source information is associated with one piece of scene information.

The source information is identification information of imaging device 80 and information regarding a specification of imaging device 80. For example, the identification information of imaging device 80 is the name and IP information of imaging device 80, and the information regarding the specification of imaging device 80 is the number of horizontal and vertical pixels of imaging device 80. One piece of layout information and one piece of preset information are associated with one piece of source information.

The layout information is information regarding a layer, a display position, a display size, and transmittance. The layer is information indicating on which layer among a plurality of layers constituting video stream Is the video captured by imaging device 80 is to be placed. The display position is information indicating horizontal and vertical position coordinates of the video on the display screen. In this example, the coordinates are determined with the upper left of the display screen as 0. The display size is information indicating the size of the video on the display screen. The transmittance is information indicating the transmittance on the display screen. In this example, a case where the transmittance is 0% indicates that the image existing in the lower layer is not visible. These pieces of layout information are determined in advance for each piece of source information.

The preset information includes information regarding position coordinates of pan, tilt, and zoom, which are parameters of imaging device 80. Furthermore, the preset information includes information indicating whether or not to output a video different from the captured video, whether or not to switch video stream Is output from information processing device 2 using switching permission signal s4, whether or not to change the video to be output to the screen, and the like. The preset information also includes a mask video and an animation video to be described later. The preset information may include information regarding a focus and an iris as parameters of imaging device 80.

When receiving switching signal s0 output from terminal device 70, video processor 50 reads the preset-related information stored in storage 60, and outputs preset setting signal s1 including the preset-related information to parameter output unit 21. Information processing device 2 starts the operation of switching video stream Is by outputting preset setting signal s1.

Based on preset setting signal s1 output from video processor 50, parameter output unit 21 outputs parameter signal s2 including information regarding the parameter to imaging device 80. Parameter signal s2 is output corresponding to each of the plurality of imaging devices 80. In imaging device 80 described above, the parameter is changed based on parameter signal s2.

Permission signal output unit 23 outputs switching permission signal s4 for permitting switching of the video stream output from information processing device 2 by receiving change completion signal s3 from imaging device 80 that has changed the parameter based on parameter signal s2. For example, when receiving change completion signal s3 from at least one of the plurality of imaging devices 80, permission signal output unit 23 outputs switching permission signal s4 corresponding to imaging device 80 that has output change completion signal s3 to video processor 50.

Video processor 50 generates video stream Is by using the video captured by imaging device 80. Video stream Is is generated based on a predetermined distribution format.

In addition, video processor 50 switches video stream Is output from information processing device 2 based on switching permission signal s4 output from permission signal output unit 23. Video stream Is output from information processing device 2 is input to display device 99, and is displayed on display device 99.

In a case where the change of the parameter of imaging device 80 is completed, information processing device 2 according to the present exemplary embodiment outputs switching permission signal s4 for permitting switching of the video stream output from information processing device 2. According to this configuration, since video stream Is can be switched after the parameter of imaging device 80 is changed, video stream Is can be appropriately switched.

### [Operation of information processing system]

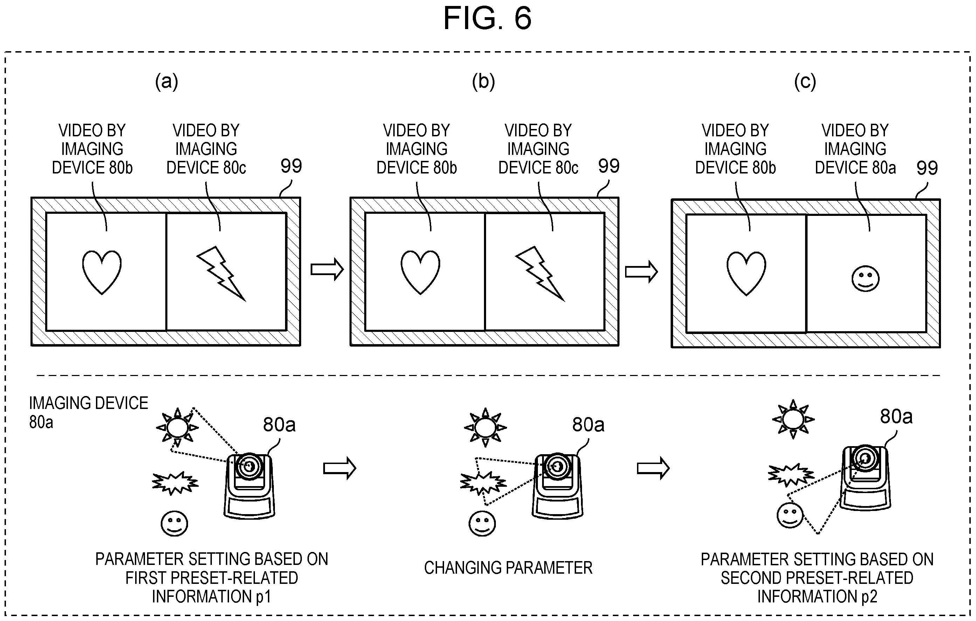

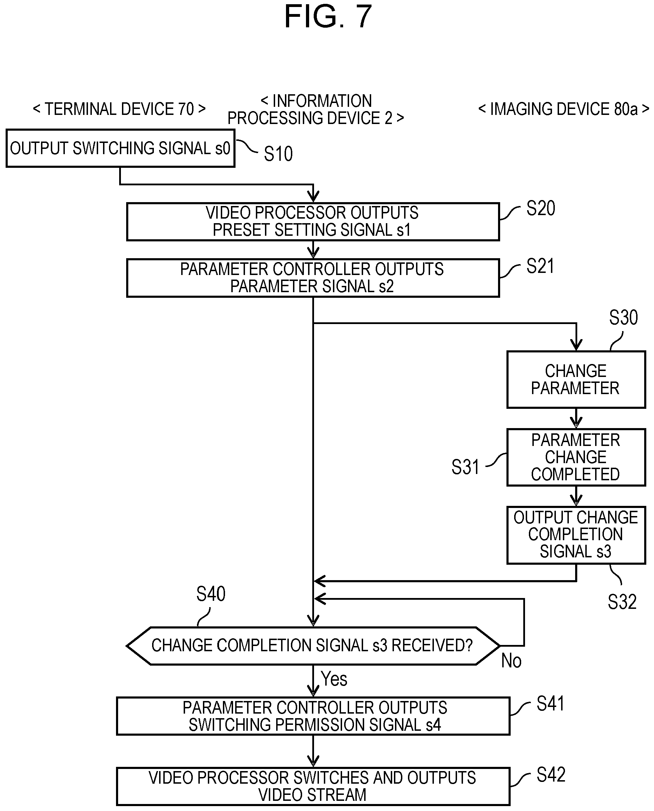

An operation of information processing system 1 will be described with reference to Figs. 6 and 7.

Fig. 6 is a diagram illustrating an example of the operation of information processing system 1 according to the exemplary embodiment. Fig. 7 is a flowchart illustrating a method for controlling information processing device 2 according to the exemplary embodiment. Note that Fig. 7 also illustrates terminal device 70 and imaging device 80.

In this example, an example of changing the right screen of the multiview screen of display device 99 from a video by imaging device 80c to a video by imaging device 80a will be described. Note that a video by imaging device 80b is continuously displayed on the left screen.

As illustrated in part (a) of Fig. 6, initially, a video by imaging device 80c is displayed on the right screen. At this time, imaging device 80a has parameter setting based on first preset-related information p1. Imaging device 80a is in a state of imaging a picture of the sun, but a video by imaging device 80a is not displayed on the screen.

When receiving a predetermined operation input from the user, terminal device 70 outputs switching signal s0 for switching video stream Is to video processor 50 of information processing device 2 (step S10). Switching signal s0 includes information instructing imaging device 80a to have parameter setting based on second preset-related information p2.

Video processor 50 of information processing device 2 reads second preset-related information p2 stored in storage 60 based on switching signal s0, and outputs preset setting signal s1 including second preset-related information p2 to parameter controller 20 (step S20). Parameter controller 20 outputs parameter signal s2 including second preset-related information p2 to imaging device 80a based on preset setting signal s1 (step S21). Parameter controller 20 stores second presetting-related information p2 at least until change completion signal s3 is received.

Upon receiving parameter signal s2, imaging device 80a drives PTZ drive unit 82 to change the parameter (step S30). Specifically, imaging device 80a drives PTZ drive unit 82 such that imaging device 80a itself has the parameter setting based on second preset-related information p2.

Note that second preset-related information p2 includes information instructing not to output the video by imaging device 80a during the parameter change, but to output the video by imaging device 80a after the parameter change. Therefore, during the parameter change, the video is not switched as illustrated in part (b) of Fig. 6, and the video by imaging device 80c is displayed on the right screen as in part (a) of Fig. 6.

When imaging device 80a enters the parameter setting state based on second preset-related information p2, that is, when the parameter change is completed (step S31), imaging device 80a outputs change completion signal s3 to information processing device 2 (step S32). Note that change completion signal s3 is output when all the parameters of pan, tilt, and zoom have been changed.

Parameter controller 20 of information processing device 2 determines whether or not change completion signal s3 output from imaging device 80a is received (step S40). Parameter controller 20, when not receiving change completion signal s3 (No in S40), returns to step S40, and when having received change completion signal s3 (Yes in S40), outputs switching permission signal s4 to video processor 50 (step S41).

Upon receiving switching permission signal s4, video processor 50 switches and outputs video stream Is output from information processing device 2 (step S42). In this example, the right half region of video stream Is is switched so as to be a video captured by imaging device 80a. As illustrated in part (c) of Fig. 6, imaging device 80a is in a state of imaging a drawing of a face, and a video captured by imaging device 80a is displayed on a right screen of display device 99.

The method for controlling information processing device 2 according to the present exemplary embodiment includes the steps of: outputting parameter signal s2 for instructing imaging device 80 to change a parameter; and outputting switching permission signal s4 for permitting switching of video stream Is output from information processing device 2 when the parameter change of imaging device 80 is completed. According to this control method, since video stream Is can be switched after the parameter of imaging device 80 is changed, video stream Is can be appropriately switched.

### (First modification of exemplary embodiment)

An information processing device 2 according to a first modification of the exemplary embodiment will be described. In this modification, an example of outputting a video different from the video captured by imaging device 80 when imaging device 80 changes the parameter will be described.

As in the exemplary embodiment, information processing device 2 according to the first modification includes communication unit 10, parameter controller 20, decoding unit 30, video processor 50, and storage 60.

Information processing device 2 of the first modification outputs a video different from the video captured by imaging device 80 when imaging device 80 changes the parameter. Specifically, video processor 50 generates video stream Is by using the video different from the video captured by imaging device 80 from the output of preset setting signal s1 to the reception of switching permission signal s4. The video different from the video captured by imaging device 80 is, for example, a mask video of a still image or a moving image. The mask video may be a single color, or may be a chromatic color or an achromatic color.

Whether or not video processor 50 outputs a video different from the video captured by imaging device 80 when imaging device 80 changes the parameter is stored in storage 60 as the preset information described above (see Fig. 5). Note that, in a case where information indicating whether or not to output a different video is included in switching signal s0 output from terminal device 70, video processor 50 may select whether or not to output a video different from the video captured by imaging device 80 based on switching signal s0.

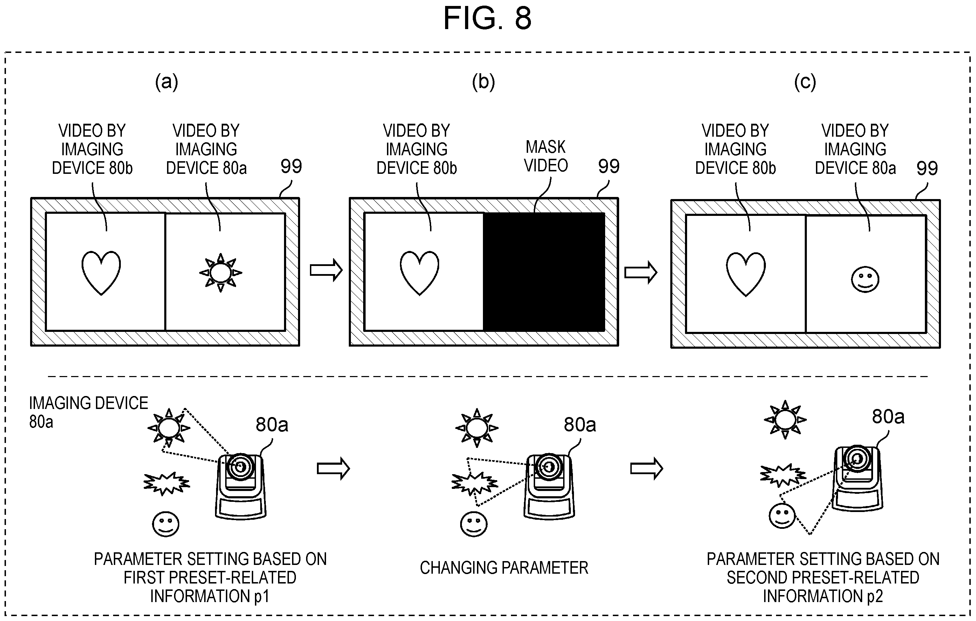

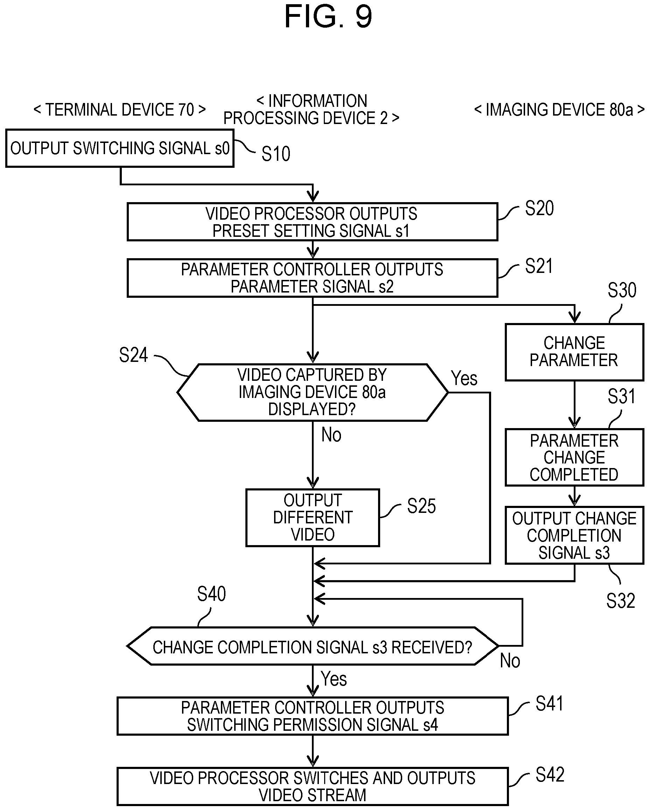

Fig. 8 is a diagram illustrating an example of an operation of information processing system 1 according to the first modification of the exemplary embodiment. Fig. 9 is a flowchart illustrating a method for controlling information processing device 2 according to the first modification of the exemplary embodiment.

In this example, an example of changing parameters of imaging device 80a in a state where the right screen of the multiview screen of display device 99 is a video by imaging device 80a will be described. Note that a video by imaging device 80b is continuously displayed on the left screen.

As illustrated in part (a) of Fig. 8, initially, a video by imaging device 80a is displayed on the right screen. At this time, imaging device 80a has parameter setting based on first preset-related information p1, and is in a state of imaging a picture of the sun, for example.

Upon receiving a predetermined operation input from the user, terminal device 70 outputs switching signal s0 for switching video stream Is to information processing device 2 (step S10). Switching signal s0 includes information instructing imaging device 80a to have parameter setting based on second preset-related information p2.

Video processor 50 of information processing device 2 reads second preset-related information p2 stored in storage 60 based on switching signal s0, and outputs preset setting signal s1 including second preset-related information p2 to parameter controller 20 (step S20). Parameter controller 20 outputs parameter signal s2 including second preset-related information p2 to imaging device 80a based on preset setting signal s1 (step S21).

Upon receiving parameter signal s2, imaging device 80a drives PTZ drive unit 82 to change the parameter (step S30). Specifically, imaging device 80a drives PTZ drive unit 82 such that imaging device 80a itself has the parameter setting based on second preset-related information p2.

During the parameter change, information processing device 2 determines whether or not to display the video captured by imaging device 80a during the parameter change (step S24). When determining to display the captured video (Yes in S24), information processing device 2 proceeds to step S40 in order to prepare to output video stream Is using the video captured by imaging device 80a. On the other hand, when determining not to display the video (No in S24), the information processing device 2 proceeds to the next step.

In this example, second preset-related information p2 includes information instructing to output a video different from the video captured by imaging device 80a during parameter change. Therefore, information processing device 2 outputs a video different from the video captured by imaging device 80a (step S25). For example, during the parameter change, a mask video different from the video captured by imaging device 80 is displayed as illustrated in part (b) of Fig. 8.

When imaging device 80a enters the parameter setting state based on second preset-related information p2, that is, when the parameter change is completed (step S31), imaging device 80a outputs change completion signal s3 to information processing device 2 (step S32).

Parameter controller 20 of information processing device 2 determines whether or not change completion signal s3 output from imaging device 80a is received (step S40). Upon receiving change completion signal s3, parameter controller 20 outputs switching permission signal s4 to video processor 50 (step S41).

Upon receiving switching permission signal s4, video processor 50 switches and outputs video stream Is output from information processing device 2 (step S42). In this example, the right half region of video stream Is is switched so as to be a video captured by imaging device 80a. As illustrated in part (c) of Fig. 8, imaging device 80a is in a state of imaging a drawing of a face, and a video captured by imaging device 80a is displayed on a right screen of display device 99.

As described above, in the first modification, video processor 50 generates video stream Is by using the video different from the video captured by imaging device 80a until receiving switching permission signal s4 after outputting preset setting signal s1. According to this configuration, for example, it is possible not to output the video during parameter change as video stream Is in response to the request of the user. Consequently, it is possible to appropriately switch video stream Is.

### (Second modification of exemplary embodiment)

Information processing device 2 according to a second modification of the exemplary embodiment will be described. In this modification, an example of selecting whether or not to switch video stream Is using switching permission signal s4 output from parameter controller 20 will be described.

As in the exemplary embodiment, information processing device 2 according to the second modification includes communication unit 10, parameter controller 20, decoding unit 30, video processor 50, and storage 60.

Video processor 50 of the second modification uses switching permission signal s4 to select whether or not to switch video stream Is output from information processing device 2. Then, when having selected not to use switching permission signal s4, video processor 50 generates video stream Is by using the video captured by imaging device 80 while changing the parameter.

Whether or not video processor 50 switches video stream Is output from information processing device 2 using switching permission signal s4 is stored in storage 60 as the preset information described above (see Fig. 5). Note that, in a case where information indicating whether or not to switch video stream Is using switching permission signal s4 is included in switching signal s0 output from terminal device 70, video processor 50 may select whether or not to switch using switching permission signal s4 based on switching signal s0.

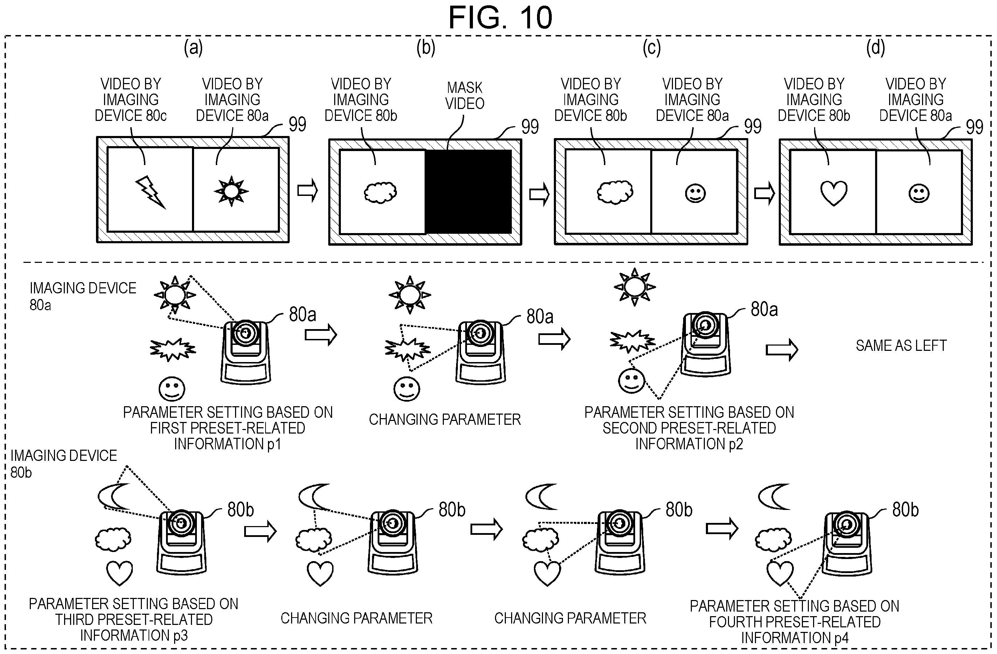

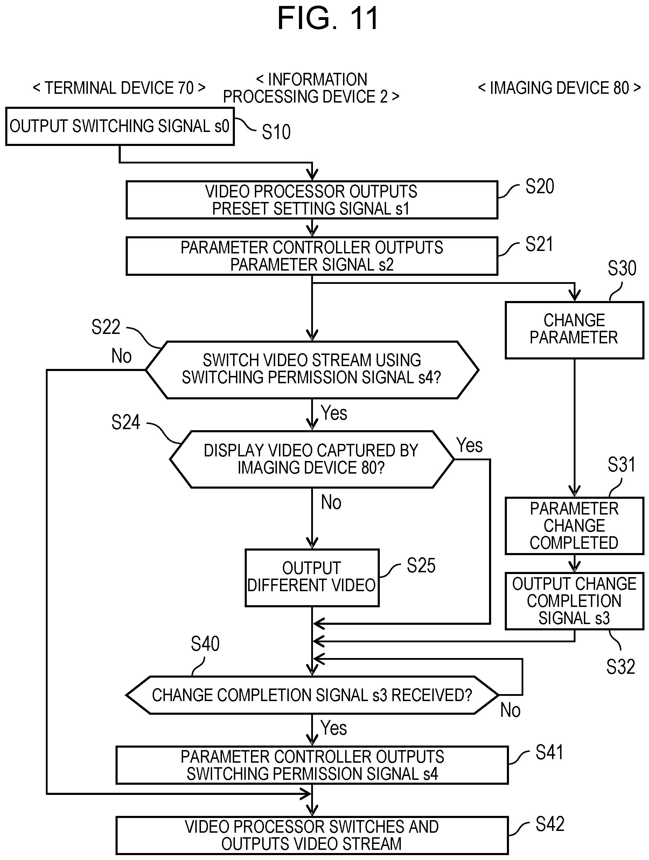

Fig. 10 is a diagram illustrating an example of an operation of information processing system 1 according the second modification of the exemplary embodiment. Fig. 11 is a flowchart illustrating a method for controlling information processing device 2 according to the second modification of the exemplary embodiment.

In this example, an example of changing parameters of imaging device 80a in a state where the right screen of the multiview screen of display device 99 is a video by imaging device 80a, and an example of switching the left screen from a video by imaging device 80c to a video by imaging device 80b will be described.

As illustrated in part (a) of Fig. 10, initially, a video by imaging device 80a is displayed on the right screen, and a video by imaging device 80c is displayed on the left screen. At this time, imaging device 80a has parameter setting based on first preset-related information p1, and is in a state of imaging a picture of the sun, for example. Imaging device 80b has parameter setting based on third preset-related information p3, and is in a state of imaging a picture of the moon, for example. Note that, at this time point, the video by imaging device 80b is not displayed on the left screen.

Upon receiving a predetermined operation input from the user, terminal device 70 outputs switching signal s0 for switching video stream Is to information processing device 2 (step S10). Switching signal s0 includes information instructing imaging device 80a to have parameter setting based on second preset-related information p2 and information instructing imaging device 80b to have parameter setting based on fourth preset-related information p4.

Video processor 50 of information processing device 2 reads second preset-related information p2 and fourth preset-related information p4 stored in storage 60 based on switching signal s0. Then, video processor 50 outputs preset setting signal s1 including second preset-related information p2 and preset setting signal s1 including fourth preset-related information p4 to parameter controller 20 (step S20). Next, parameter controller 20 outputs parameter signal s2 including second preset-related information p2 to imaging device 80a and outputs parameter signal s2 including fourth preset-related information p4 to imaging device 80b based on respective preset setting signals s1 (step S21).

Upon receiving parameter signal s2, each of imaging devices 80a, 80b drives PTZ drive unit 82 to change the parameter (step S30). Specifically, imaging device 80a drives PTZ drive unit 82 such that imaging device 80a itself has the parameter setting based on second preset-related information p2. In addition, imaging device 80b drives PTZ drive unit 82 such that the imaging device itself has the parameter setting based on fourth preset-related information p4.

During the parameter change, information processing device 2 selects whether or not to switch video stream Is using switching permission signal s4 (step S22). When determining not to use switching permission signal s4 (No in S22), information processing device 2 proceeds to step S42, and outputs video stream Is by using the video captured by imaging device 80a. On the other hand, when information processing device 2 determines to switch the video stream using switching permission signal s4 (Yes in S22), information processing device 2 proceeds to next step S24. Steps S24 and S25 are the same as those in the first modification.

The determination in step S22 is executed for each of preset setting signal s1 including second preset-related information p2 and preset setting signal s1 including fourth preset-related information p4. That is, the determination in step S22 is executed for each of imaging devices 80a, 80b.

In this example, second preset-related information p2 includes information instructing to switch video stream Is using switching permission signal s4. Therefore, information processing device 2 executes steps S24 and S25 on imaging device 80a. On the other hand, fourth preset-related information p4 includes information instructing to switch video stream Is without using switching permission signal s4. Therefore, information processing device 2 proceeds to step S42 without executing steps S24 and S25 on imaging device 80b.

For example, during the parameter change, a mask video different from the video captured by imaging device 80a is displayed on the right screen as illustrated in part (b) of Fig. 10. During the parameter change, the video captured by imaging device 80b is displayed as it is on the left screen as illustrated in parts (b) and (c) of Fig. 10. As illustrated in parts (b) and (c) of Fig. 10, imaging device 80b is in a state of imaging a picture of a cloud, and a video captured by imaging device 80b is displayed on the left screen of display device 99.

When imaging device 80a enters the parameter setting state based on second preset-related information p2, that is, when the parameter change is completed (step S31), imaging device 80a outputs change completion signal s3 to information processing device 2 (step S32). Note that change completion signal s3 is also output from imaging device 80b, but in this example, change completion signal s3 output from imaging device 80b is not used by information processing device 2.

Parameter controller 20 of information processing device 2 determines whether or not change completion signal s3 output from imaging device 80a is received (step S40). Upon receiving change completion signal s3, parameter controller 20 outputs switching permission signal s4 to video processor 50 (step S41).

Upon receiving switching permission signal s4, video processor 50 switches and outputs video stream Is output from information processing device 2 (step S42). In this example, the right half region of video stream Is is switched so as to be a video captured by imaging device 80a. As illustrated in part (c) of Fig. 10, imaging device 80a is in a state of imaging a drawing of a face, and a video captured by imaging device 80a is displayed on the right screen of display device 99. Furthermore, as illustrated in part (d) of Fig. 10, imaging device 80b is in a state of imaging a picture of a heart mark, and a video captured by imaging device 80b is displayed on the left screen of display device 99.

As described above, in the second modification, it is possible to select whether or not to switch video stream Is output from information processing device 2 using switching permission signal s4. In a case where it is selected to use switching permission signal s4, video processor 50 switches and outputs video stream Is after receiving switching permission signal s4, and in a case where it is not selected to use switching permission signal s4, the video processor generates the video stream by using the video captured by imaging device 80 while changing the parameter. According to this configuration, it is possible to provide information processing device 2 capable of selecting whether or not to switch video stream Is using switching permission signal s4.

### (Third modification of exemplary embodiment)

An information processing device 2 according to a third modification of the exemplary embodiment will be described. In this modification, an example of changing a video to be output to the screen according to a change degree of the parameter of imaging device 80 will be described.

As in the exemplary embodiment, information processing device 2 according to the third modification includes communication unit 10, parameter controller 20, decoding unit 30, video processor 50, and storage 60.

Information processing device 2 of the third modification acquires information regarding a change degree of a parameter when imaging device 80 changes the parameter. Then, information processing device 2 calculates a layout position of a video on a display screen that displays a video according to the change degree of the parameter, and generates video stream Is so that the video is displayed at the layout position. The change degree of the parameter is an arrival rate (movement rate) until the target position is reached based on the position before the parameter change. For example, in a case where camera unit 83 is rotated by 90° in a pan direction, the arrival rate at the time of 45° rotation is 50% (0.5 in terms of ratio).

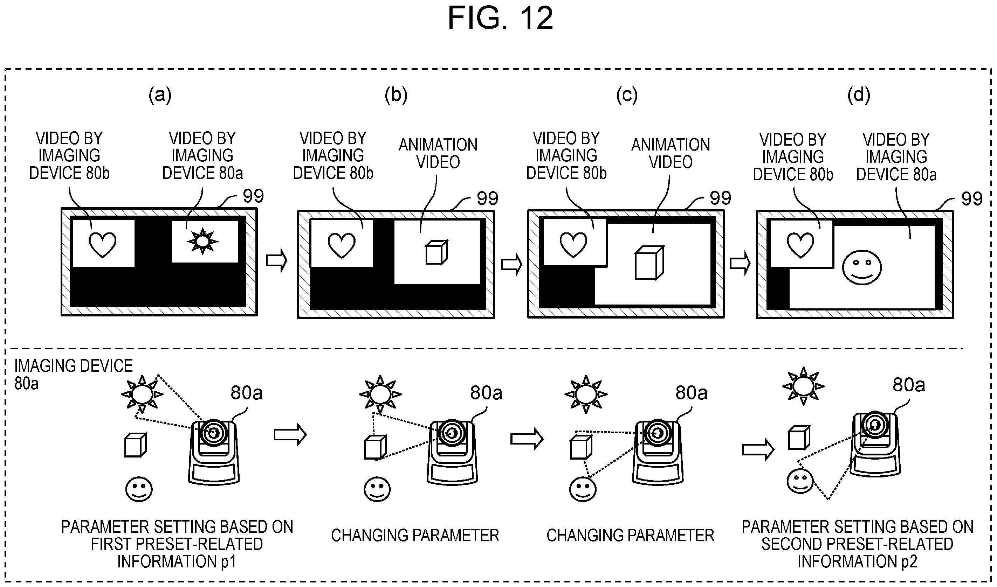

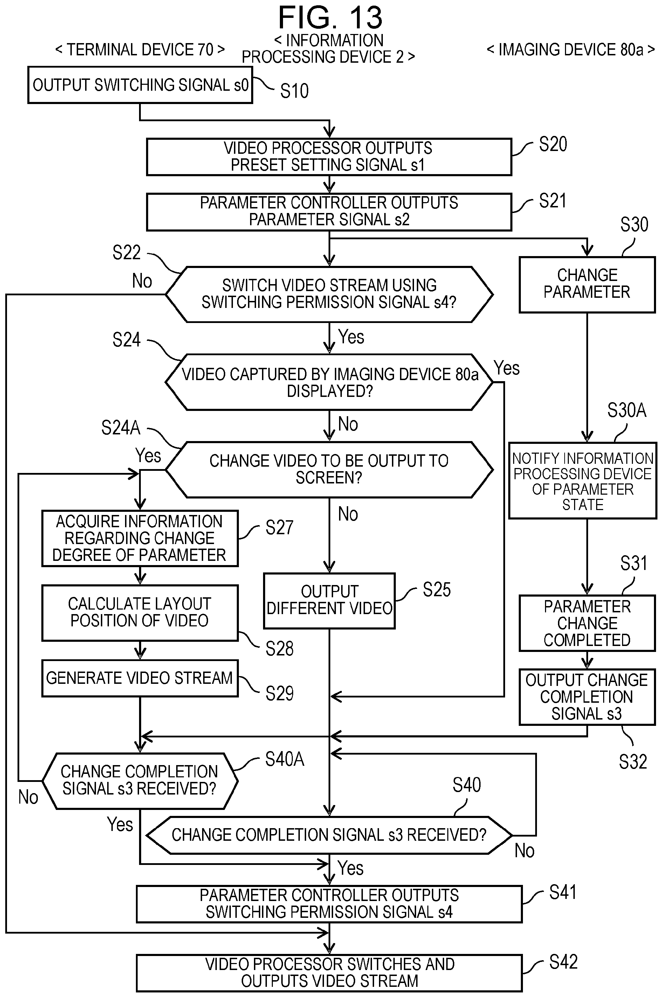

Fig. 12 is a diagram illustrating an example of an operation of information processing system 1 according to the third modification of the exemplary embodiment. Fig. 13 is a flowchart illustrating a method for controlling information processing device 2 according to the third modification of the exemplary embodiment.

In this example, an example of setting the right side of a multiview screen of display device 99 as a video by imaging device 80a, and changing the video displayed on the screen while changing parameters of imaging device 80a will be described. On the left side of the screen, the video by imaging device 80b is displayed in a small size.

As illustrated in part (a) of Fig. 12, initially, the video by imaging device 80a is displayed in a small size on the right side of the screen. At this time, imaging device 80a has parameter setting based on first preset-related information p1. For example, imaging device 80a is in a state of imaging a picture of the sun.

Upon receiving a predetermined operation input from the user, terminal device 70 outputs switching signal s0 for switching video stream Is to information processing device 2 (step S10). Switching signal s0 includes information instructing imaging device 80a to have parameter setting based on second preset-related information p2.

Video processor 50 of information processing device 2 reads second preset-related information p2 stored in storage 60 based on switching signal s0, and outputs preset setting signal s1 including second preset-related information p2 to parameter controller 20 (step S20). Parameter controller 20 outputs parameter signal s2 including second preset-related information p2 to imaging device 80a based on preset setting signal s1 (step S21).

Upon receiving parameter signal s2, imaging device 80a drives PTZ drive unit 82 to change the parameter (step S30). Specifically, imaging device 80a drives PTZ drive unit 82 such that imaging device 80a itself has the parameter setting based on second preset-related information p2. In this modification, when the above-described parameters are changed, PTZ drive unit 82 notifies information processing device 2 of the state of each parameter (step S30A). For example, during the parameter change, PTZ drive unit 82 outputs information regarding a change degree of a parameter to information processing device 2 via communication unit 81.

During the parameter change, information processing device 2 selects whether or not to switch video stream Is using switching permission signal s4 (step S22). Step S22 is the same as that in the second modification.

Furthermore, information processing device 2 determines whether or not to display the video captured by imaging device 80a during the parameter change (step S24). When it is determined to display a video captured by imaging device 80a (Yes in S24), information processing device 2 proceeds to step S40 as in the first modification, and when it is determined not to display a video captured by imaging device 80a (No in S24), information processing device 2 proceeds to the next step.

In the next step, it is determined whether or not to change a video to be output to the screen according to the change degree of a parameter (step S24A). Information processing device 2, when determining not to change the video to be output to the screen (No in S24A), executes step S25 as in the first modification. On the other hand, information processing device 2, when determining to change the video to be output to the screen (Yes in S24A), acquires information regarding the change degree of the parameter from imaging device 80a (step S27).

Next, information processing device 2 calculates the layout position of the video on the display screen that displays the video according to the change degree of the parameter (step S28). The layout position of the video on the display screen is calculated by, for example, the following (Formula 1). Layout position = [(display position based on second preset-related information p2) - (display position based on first preset-related information p1)] × arrival rate + (display position based on first preset-related information p1)

Note that the display position is position information on the screen as illustrated in Fig. 5.

Video processor 50 generates video stream Is such that the video is displayed at the layout position calculated by (Formula 1) (step S29).

In this example, second preset-related information p2 includes information instructing to output a video different from the video captured by imaging device 80a during parameter change, and information instructing to change the different video. Therefore, information processing device 2 outputs a video different from the video captured by imaging device 80a while changing the video. For example, during the parameter change, as illustrated in parts (b) and (c) of Fig. 12, an animation video slightly different from the video captured by imaging device 80a is displayed so as to gradually and largely change toward the center.

When imaging device 80a enters the parameter setting state based on second preset-related information p2, that is, when the parameter change is completed (step S31), imaging device 80a outputs change completion signal s3 to information processing device 2 (step S32).

Parameter controller 20 of information processing device 2 determines whether or not change completion signal s3 output from imaging device 80a is received (step S40A).

Upon receiving change completion signal s3 (Yes in S40A), parameter controller 20 outputs switching permission signal s4 to video processor 50 (step S41). When change completion signal s3 is not received in step S40A (No in S40A), the process returns to step S27.

Upon receiving switching permission signal s4, video processor 50 switches and outputs video stream Is output from information processing device 2 (step S42). In this example, the right half region of video stream Is is switched so as to be a video captured by imaging device 80a. As illustrated in part (d) of Fig. 12, imaging device 80a is in a state of imaging a drawing of a face, and a video captured by imaging device 80a is displayed on the right screen of display device 99.

As described above, in the third modification, video processor 50 generates video stream Is that changes according to the change degree of the parameter by using a video different from the video captured by imaging device 80a from the output of preset setting signal s1 to the reception of switching permission signal s4. According to this configuration, it is possible to provide information processing device 2 that outputs video stream Is while changing video stream Is according to the change degree of the parameter.

### (Conclusion)

As described above, information processing device 2 according to the present exemplary embodiment is an information processing device that outputs video stream Is using a video captured by imaging device 80 capable of changing at least one parameter among pan, tilt, and zoom, and includes parameter controller 20 that controls the parameter of imaging device 80. Parameter controller 20 instructs imaging device 80 to change the parameter, and outputs switching permission signal s4 for permitting switching of video stream Is output from information processing device 2 in a case where the change of the parameter of imaging device 80 is completed.

According to information processing device 2, it is possible to switch video stream Is after changing the parameter of imaging device 80. Consequently, it is possible to appropriately switch video stream Is.

Furthermore, parameter controller 20 may include parameter output unit 21 that outputs parameter signal s2 instructing imaging device 80 to change the parameter, and a permission signal output unit 23 that outputs switching permission signal s4 by receiving change completion signal s3 indicating that the change of the parameter is completed from imaging device 80 with the parameter changed based on parameter signal s2.

According to this, it is possible to output switching permission signal s4 after reliably confirming that the parameter of imaging device 80 has been changed. Consequently, it is possible to appropriately switch video stream Is.

Furthermore, information processing device 2 further includes video processor 50 that generates video stream Is by using a video captured by imaging device 80. Parameter controller 20 outputs switching permission signal s4 to video processor 50. Video processor 50 may switch video stream Is output from information processing device 2 based on switching permission signal s4.

By outputting switching permission signal s4 to video processor 50 as described above, video processor 50 can appropriately switch video stream Is.

Furthermore, video processor 50 may output preset setting signal s1 including the information regarding the parameter to parameter controller 20, and parameter controller 20 may instruct imaging device 80 to change the parameter based on preset setting signal s1.

As described above, by changing the parameter based on preset setting signal s1 output from video processor 50, video processor 50 can appropriately switch video stream Is.

Furthermore, information processing device 2 further includes storage 60 that stores parameters. Video processor 50 may read the parameter stored in storage 60, and output preset setting signal s1 including the information regarding the parameter.

As described above, by changing the parameter based on preset setting signal s1 including the information regarding the parameter stored in storage 60, video processor 50 can appropriately switch video stream Is.

Further, video processor 50 may generate video stream Is by using a video different from the video captured by imaging device 80 from the output of preset setting signal s1 to the reception of switching permission signal s4.

According to this configuration, for example, it is possible not to output the video during parameter change as video stream Is in response to the request of the user. Consequently, it is possible to appropriately switch video stream Is.

Furthermore, a video different from the video captured by imaging device 80 may be a mask video.

According to this configuration, the video during the parameter change can be hidden as the mask video. Consequently, it is possible to appropriately switch video stream Is.

Furthermore, information processing device 2 further includes video processor 50 that generates video stream Is by using a video captured by imaging device 80. Video processor 50 may select whether or not to use switching permission signal s4 with respect to the switching of video stream Is output from information processing device 2, and, when having selected not to use switching permission signal s4, generate video stream Is by using the video captured by imaging device 80 while changing the parameter.

According to this configuration, it is possible to provide information processing device 2 capable of selecting whether or not to switch video stream Is.

Furthermore, information processing device 2 may acquire the information regarding the change degree of a parameter when imaging device 80 changes the parameter, calculate the layout position of the video on the display screen that displays the video according to the change degree of the parameter, and generate video stream Is such that the video is displayed at the layout position.

According to this configuration, it is possible to provide information processing device 2 that outputs video stream Is while changing video stream Is according to the change degree of the parameter.

In addition, the change degree of the parameter may be an arrival rate until reaching a target position based on the position before parameter change.

According to this configuration, it is possible to provide information processing device 2 that outputs a video while changing the video based on the arrival rate.

Furthermore, parameter output unit 21 may output parameter signal s2 corresponding to each of the plurality of imaging devices 80 to each of the plurality of imaging devices 80, and permission signal output unit 23 may output, upon receiving change completion signal s3 from at least one of the plurality of imaging devices 80, switching permission signal s4 corresponding to imaging device 80 that has output change completion signal s3.

According to this configuration, video stream Is can be switched according to the change of the parameter of each of the plurality of imaging devices 80. Consequently, it is possible to appropriately switch video stream Is.

Furthermore, information processing device 2 further includes decoding unit 30 that receives, as an input, video information obtained by performing encoding processing on a video captured by imaging device 80. Decoding unit 30 may perform decoding processing on each of the plurality of pieces of video information captured by the plurality of imaging devices 80, and output the plurality of videos after the decoding processing to video processor 50.

According to this configuration, video stream Is can be switched using the plurality of videos output from decoding unit 30. Consequently, it is possible to appropriately switch video stream Is.

Information processing system 1 according to the present exemplary embodiment includes imaging device 80 capable of changing at least one parameter among pan, tilt, and zoom, parameter controller 20 that controls the parameter of imaging device 80, and video processor 50 that outputs video stream Is by using the video captured by imaging device 80. Parameter controller 20 instructs imaging device 80 to change the parameter, and outputs switching permission signal s4 for permitting switching of video stream Is output from video processor 50 to video processor 50 when the change of the parameter of imaging device 80 is completed. Video processor 50 switches video stream Is based on switching permission signal s4.

According to information processing system 1, video stream Is can be switched after the parameter of imaging device 80 is changed. Consequently, it is possible to appropriately switch video stream Is.

The method for controlling information processing device 2 according to the present exemplary embodiment is a method for controlling an information processing device that outputs video stream Is by using a video captured by imaging device 80 capable of changing at least one parameter among pan, tilt, and zoom. The method for controlling information processing device 2 includes the steps of: outputting parameter signal s2 for instructing imaging device 80 to change a parameter; and outputting switching permission signal s4 for permitting switching of video stream Is output from information processing device 2 in a case where the change of the parameter of imaging device 80 is completed.

According to this control method, since video stream Is can be switched after the parameter of imaging device 80 is changed, video stream Is can be appropriately switched.

Furthermore, the control method of information processing device 2 may further include a step of switching video stream Is based on switching permission signal s4.

Consequently, video stream Is can be appropriately switched based on switching permission signal s4.

Furthermore, the method for controlling information processing device 2 further includes a step of reading a parameter stored in storage 60 and outputting preset setting signal s1 including information regarding the parameter. In the step of outputting parameter signal s2, parameter signal s2 may be output according to the output of preset setting signal s1.

Consequently, video stream Is can be appropriately switched according to preset setting signal s1.

Furthermore, the method for controlling information processing device 2 may further include a step of outputting a video different from the video captured by imaging device 80 from the output of preset setting signal s1 to the reception of switching permission signal s4.

According to this, for example, it is possible not to output the video during the parameter change as video stream Is in response to the request of the user. Consequently, it is possible to appropriately switch video stream Is.

Furthermore, the method for controlling information processing device 2 may further include a step of selecting whether or not to use switching permission signal s4 with respect to switching of video stream Is output from information processing device 2, and, when having selected not to use switching permission signal s4, a step of generating video stream Is by using the video captured by imaging device 80 while changing the parameter.

According to this, it is possible to provide a method for controlling information processing device 2 capable of selecting whether or not to switch video stream Is.

Furthermore, the method for controlling information processing device 2 may further include: a step of acquiring information regarding a change degree of a parameter when imaging device 80 changes the parameter; and a step of calculating a layout position of a video on a display screen that displays the video according to the change degree of the parameter, and generating video stream Is such that the video is displayed at the layout position.

According to this, it is possible to provide a method for controlling information processing device 2 that outputs video stream Is while changing video stream Is according to the change degree of the parameter.

### (Other exemplary embodiments)

Although the exemplary embodiments have been described above, the present disclosure is not limited to such exemplary embodiments.

In the above exemplary embodiments, an example in which parameter controller 20 outputs switching permission signal s4 to video processor 50 based on change completion signal s3 output from imaging device 80 has been described. However, the present disclosure is not limited to this. For example, in a case where imaging device 80 has a configuration to output position coordinates of its own parameter to parameter controller 20, parameter controller 20 may determine whether or not the change of the parameter is completed based on the position coordinates, and output switching permission signal s4 to video processor 50 when the change is completed.

General or specific aspects of the present disclosure may be implemented by a system, a device, a method, an integrated circuit, a computer program, or a computer-readable recording medium such as a CD-ROM. In addition, the present invention may be implemented by any combination of a system, a device, a method, an integrated circuit, a computer program, and a recording medium.

In addition, the order of the processing described in the flowchart of the above exemplary embodiment and the like is an example. The order of the plurality of processing may be changed, or the plurality of processing may be executed in parallel.

Furthermore, the division of the functional blocks in the block diagram is an example, and a plurality of functional blocks may be implemented as one functional block, one functional block may be divided into a plurality of functional blocks, or some functions may be transferred to another functional block. In addition, functions of a plurality of functional blocks having similar functions may be processed in parallel or in a time division manner by single hardware or software.

In the exemplary embodiments and the like, each component (for example, a processor such as a controller) may be constructed with dedicated hardware, or implemented by executing a software program suitable for each component. Each component may be implemented by a program execution unit such as a central processing unit (CPU) or a processor reading and executing a software program recorded in a recording medium such as a hard disk or a semiconductor memory. Further, for example, each component may be a circuit (or an integrated circuit). These circuits may constitute one circuit as a whole or may be separate circuits. Each of these circuits may be a general-purpose circuit or a dedicated circuit.

In addition, the present disclosure also includes a mode obtained by making various modifications conceivable by those skilled in the art to the above-described exemplary embodiments and the like, or a mode realized by arbitrarily combining components and functions in each exemplary embodiment without departing from the gist of the present disclosure.

### INDUSTRIAL APPLICABILITY

The information processing device or the like of the present disclosure can be used as a switcher device or the like for switching a video stream.

### REFERENCE MARKS IN THE DRAWINGS

1: information processing system
2: information processing device
10: communication unit
20: parameter controller
21: parameter output unit
23: permission signal output unit
30: decoding unit
50: video processor
60: storage
70: terminal device
80, 80a, 80b, 80c: imaging device
81: communication unit
82: PTZ drive unit
83: camera unit
84: encoding unit
99: display device
Is: video stream
p1, p2, p3, p4: preset-related information
s0: switching signal
s1: preset setting signal
s2: parameter signal
s3: change completion signal
s4: switching permission signal

## Claims

1. An information processing device that outputs a video stream by using a video captured by an imaging device capable of changing at least one parameter among pan, tilt, and zoom, the information processing device comprising
a parameter controller that controls the at least one parameter of the imaging device,
wherein the parameter controller instructs the imaging device to change the at least one parameter, and outputs a switching permission signal for permitting switching of the video stream output from the information processing device when the change of the at least one parameter of the imaging device is completed.

2. The information processing device according to Claim 1, wherein
the parameter controller includes
a parameter output unit that outputs a parameter signal for instructing the imaging device to change the at least one parameter, and
a permission signal output unit that outputs the switching permission signal in response to receiving a change completion signal indicating that the change of the at least one parameter is completed from the imaging device with the at least one parameter changed based on the parameter signal.

3. The information processing device according to Claim 1 or 2, further comprising a video processor that generates the video stream by using the video captured by the imaging device,
wherein the parameter controller outputs the switching permission signal to the video processor, and
the video processor switches the video stream output from the information processing device based on the switching permission signal.

4. The information processing device according to Claim 3, wherein
the video processor outputs a preset setting signal including information regarding the at least one parameter to the parameter controller, and
the parameter controller instructs the imaging device to change the at least one parameter based on the preset setting signal.

5. The information processing device according to Claim 4, further comprising a storage that stores the at least one parameter,
wherein the video processor reads the at least one parameter stored in the storage, and outputs the preset setting signal including the information regarding the at least one parameter.

6. The information processing device according to Claim 4, wherein the video processor generates a video stream by using a video different from the video captured by the imaging device until the switching permission signal is received after the preset setting signal is output.

7. The information processing device according to Claim 6, wherein the video different from the video captured by the imaging device is a mask video.

8. The information processing device according to Claim 1 or 2, further comprising a video processor that generates the video stream by using the video captured by the imaging device,
wherein the video processor selects whether or not to use the switching permission signal with respect to the switching of the video stream output from the information processing device, and, when having selected not to use the switching permission signal, generates the video stream by using a video captured by the imaging device while changing the at least one parameter.

9. The information processing device according to Claim 1 or 2, wherein the information processing device acquires information regarding a change degree of the at least one parameter when the imaging device changes the at least one parameter, calculates a layout position of the video on a display screen that displays the video according to the change degree of the at least one parameter, and generates the video stream to display the video at the layout position.

10. The information processing device according to Claim 9, wherein the change degree of the at least one parameter is an arrival rate to reach a target position with reference to a position before the change of the at least one parameter.

11. The information processing device according to Claim 2, wherein
the parameter output unit outputs, to each of a plurality of imaging devices, each of the plurality of imaging devices being the imaging device, the parameter signal corresponding to each of the plurality of imaging devices, and
the permission signal output unit, when receiving the change completion signal from at least one imaging device among the plurality of imaging devices, outputs the switching permission signal corresponding to the at least one imaging device that has output the change completion signal.

12. The information processing device according to Claim 3, further comprising a decoding unit that receives, as an input, video information obtained by performing encoding processing on the video captured by the imaging device,
wherein the decoding unit performs decoding processing on the video information corresponding to the video captured by each of a plurality of imaging devices, each of the plurality of imaging devices being the imaging device, and outputs the video that the decoding processing is performed to the video processor.

13. An information processing system comprising:
an imaging device capable of changing at least one parameter among pan, tilt, and zoom;
a parameter controller that controls the at least one parameter of the imaging device; and
a video processor that outputs a video stream by using a video captured by the imaging device,
wherein the parameter controller instructs the imaging device to change the at least one parameter, and outputs a switching permission signal for permitting switching of the video stream output from the video processor to the video processor when the change of the at least one parameter of the imaging device is completed, and
the video processor switches the video stream based on the switching permission signal.

14. A method for controlling an information processing device that outputs a video stream by using a video captured by an imaging device capable of changing at least one parameter among pan, tilt, and zoom, the method comprising the steps of:
outputting a parameter signal for instructing the imaging device to change the at least one parameter; and
outputting a switching permission signal for permitting switching of the video stream output from the information processing device when the change of the at least one parameter of the imaging device is completed.

15. The method according to Claim 14, further comprising a step of switching the video stream based on the switching permission signal.

16. The method according to Claim 15, further comprising a step of reading the at least one parameter stored in a storage and outputting a preset setting signal including information regarding the at least one parameter,
wherein in the step of outputting the parameter signal, the parameter signal is output according to the outputting of the preset setting signal.

17. The method according to Claim 16, further comprising a step of outputting a video different from the video captured by the imaging device from when the preset setting signal is output to when the switching permission signal is received.

18. The method according to Claim 14, further comprising:
a step of selecting whether or not to use the switching permission signal with respect to the switching of the video stream output from the information processing device; and
a step of generating, when having selected not to use the switching permission signal in the step of selecting, the video stream by using a video captured by the imaging device while changing the at least one parameter.

19. The method according to any one of Claims 14 to 16, further comprising:
a step of acquiring information regarding a change degree of the at least one parameter when the imaging device changes the at least one parameter; and
a step of calculating a layout position of the video on a display screen that displays the video according to the change degree of the at least one parameter, and generating the video stream to display the video at the layout position.
